# EUROPÄISCHE PATENTSCHRIFT

(11) **EP 2 307 247 B1**
(45) Veröffentlichungstag und Bekanntmachung des Hinweises auf die Patenterteilung: **18.10.2017**
(21) Anmeldenummer: 09772112.0
(22) Anmeldetag: 25.06.2009
(51) Int. Cl.: B60T 7/08, B60T 13/26, B60T 17/18

(54) **FERTIGERBREMSE**
FINISHER BRAKE
FREIN POUR FINISSEUSE

(30) Priorität: 01.07.2008 DE 102008030656
(43) Veröffentlichungstag der Anmeldung: 13.04.2011
(73) Patentinhaber: WABCO GmbH, 30453 Hannover (DE)
(72) Erfinder: BARLSEN, Holger, 30851 Langenhagen (DE); GORCZYCA, Sven, 30173 Hannover (DE); HOLST, Hans, 30926 Seelze/velber (DE); RONNENBERG, Udo, 30900 Wedemark (DE); SCHRADER, Christian, 31228 Peine (DE); STENDER, Axel, 31787 Hamein (DE)
(74) Vertreter: Lauerwald, Jörg
(86) Internationale Anmeldenummer: PCT/EP2009/004573
(87) Internationale Veröffentlichungsnummer: WO 2010/000412

(56) Entgegenhaltungen:
- EP-A2- 1 698 535
- WO-A1-01/94147
- US-A- 5 190 118
- US-A1- 2003 168 908

## Beschreibung

Die vorliegende Erfindung betrifft eine Bremsvorrichtung für ein Lastkraftfahrzeug, das insbesondere an einen Fertiger koppelbar ist und eine Kippmulde und/oder einen Kippmuldenanhänger aufweist, mit einer Bremsanlage zum Aufbringen einer Bremskraft auf zumindest ein Rad des Lastkraftfahrzeugs, einer Steuereinheit zur elektronischen Regelung der Bremsanlage, und einem Schalter zur Aktivierung einer Fertiger-Bremsfunktion.

Die Erfindung betrifft weiterhin ein Verfahren zur Anpassung der Bremsung eines Lastkraftfahrzeugs mit Kippmulde und/oder Kippmuldenanhänger und angekoppeltem Fertiger.

Bremsvorrichtungen der vorstehend genannten Art und Verfahren der vorstehend genannten Art kommen bei Lastkraftfahrzeugen zum Einsatz, die im Baugewerbe und insbesondere im Straßenbau eingesetzt werden. Zum Anlegen ebener Flächen, insbesondere Straßen werden sogenannte Straßenfertiger eingesetzt. Ein Straßenfertiger verteilt ein auf den Untergrund flächig aufzutragendes Material gleichmäßig über eine vorbestimmte Breite. Weiterhin wird das gleichmäßig verteilte Material auf dem Untergrund geglättet und verdichtet. Das von dem Straßenfertiger zu verarbeitende Material wird diesem in der Regel von einem Lastkraftwagen zugeführt, welcher ein Kippmuldenlaster oder ein Laster mit Kippmuldenanhänger sein kann. Das Material wird dem Straßenfertiger durch Kippen der Kippmulde zugeführt. Hierbei wird der Lastkraftwagen in Fahrtrichtung vor den Straßenfertiger angekoppelt, um die Relativposition zwischen dem Lastkraftfahrzeug und dem Fertiger im Wesentlichen konstant halten zu können. Nach abgeschlossenem Ankoppelvorgang wird der Vorschub der Kombination Lastkraftwagen/Straßenfertiger von dem Straßenfertiger gewährleistet. Um insbesondere auf abfallenden Strecken ein Lösen des Lastkraftwagens von dem Straßenfertiger zu verhindern, wird von dem Bremssystem des Lastkraftwagens eine Bremskraft aufgebracht.

Bekannt sind Bremsvorrichtungen, die eine statische Bremskraft erzeugen, die mittels eines Druckventils einstellbar ist, welches an dem zu bremsenden Fahrzeug verbaut ist. Die Einstellung des Druckventils erfolgt hierbei manuell mit einem Schraubendreher. Die bekannten Bremsvorrichtungen sind dazu ausgebildet, bei aktivierter Bremsfunktion die besagte statische Bremskraft auf die Bremsanlage des Lastkraftwagens zu übertragen.

Beim Einsatz der bekannten Bremsvorrichtungen kann es insbesondere bei einem sich ändernden Fahrbahngefälle dazu kommen, dass die von der Bremsvorrichtung vorgegebene Bremskraft nicht mehr ausreicht, um den LKW mit dem Straßenfertiger verbunden zu halten. In diesem Fall wird eine Änderung der Bremskraft notwendig. Die Höhe der Bremskraft muss in einem solchen Fall manuell nachgeregelt werden, was bei den bekannten Systemen unter anderem aufgrund der schlechten Zugänglichkeit des Druckventils sehr aufwändig ist. Dies stellt im Betrieb ein erhebliches Problem dar.

EP 1 698 535 A2 offenbart eine Fahrzeuganhängeranordnung mit einer Bremssteuereinrichtung mit einer weiteren programmierbaren Steuereinrichtung über wenigstens einen Signalpfad mit der Bremssteuereinrichtung zu verbinden. Hierdurch lassen sich vom Benutzer kommandierbare Funktionen im Anhänger mit Einschränkungen aus Betriebszustandsgrößen, beispielsweise Geschwindigkeit, Neigung, Beladung des Anhängers verknüpfen und für unterschiedliche Funktionen Sicherheitskriterien definieren. Beschrieben ist ferner ein Aufbau einer solchen weiteren Steuereinrichtung mit einem anhängerseitigen Steuermodul und einem tragbaren Bedienmodul.

Der vorliegenden Erfindung liegt somit die Aufgabe zugrunde, eine Bremsvorrichtung anzugeben, welche eine verbesserte Einstellbarkeit des Bremsdruckes für den Betrieb eines Straßenfertigers in Kombination mit einem Lastkraftwagen aufweist.

Die Erfindung löst die Aufgabe bei einer Bremsvorrichtung der eingangs genannten Art durch ein Bedienelement zur manuellen Änderung des ausgeregelten Bremsdrucks. Das Bedienelement versetzt den Bediener in die Lage, vor und auch während des Betriebs des Fertigers den für die Fertiger-Bremsfunktion angewiesenen Druck auf einfache Weise zu ändern. Das erfindungsgemäße Bedienelement ist je nach Anwendungsbedarf an verschiedenen Stellen des Lastkraftfahrzeuges anbringbar, beispielsweise am Anhänger oder einem Seitenbereich des LKW sowie insbesondere im Bereich des Fahrerhauses.

In einer bevorzugten Ausführungsform der Erfindung ist die Steuereinheit dazu ausgebildet, wahlweise automatisch einen Standard-Bremsdruck auszuregeln oder mittels der Verarbeitung von Signalen, die manuell von einem Bediener mittels des Bedienelements erzeugt wurden, einen entsprechenden Bremsdruck auszuregeln. Der beispielsweise in einem Datenspeicher für die Steuereinheit hinterlegte Standard-Bremsdruck wird auf diese Weise standardmäßig von der Steuereinheit ausgeregelt, solange kein von diesem Vorgabewert abweichender Bremsdruck mittels des Bedienelements eingegeben wird. Auf diese Weise ist gewährleistet, dass die Fertiger-Bremsfunktion mit einem Standard-Parameter für Standard-Einsatzbedingungen auch dann funktioniert, wenn nicht extra vom Bediener ein Fertiger-Bremsdruck vorgegeben wurde.

Gemäß einer weiteren vorteilhaften Ausführungsform der erfindungsgemäßen Bremsvorrichtung ist das Bedienelement als Bedientafel ausgebildet, die mittels elektronischer Datenleitungen, insbesondere einem CAN-Bus, mit der Steuereinheit verbunden ist, um Signale zu übertragen, die von der Steuereinheit gesendet werden oder von einem Bediener mittels der Bedientafel eingegeben werden. Das so ausgebildete Bedienelement ist in besonderem Maße flexibel an dem Fahrzeug anbringbar und lässt sich weiterhin auch für andere Befehlseingaben verwenden, die für den Betrieb des Lastkraftwagens relevant sind. Die Verwendung eines CAN-Bus-Systems ist insbesondere deswegen von Vorteil, weil mehrere Steuergeräte des Fahrzeuges an einer einzigen Leitung angeschlossen sein können, was den Installationsaufwand für solche Systeme erheblich vermindert.

Bei einer alternativen Ausführungsform der erfindungsgemäßen Bremsvorrichtung ist die Bedientafel mit Bedienschaltern und einem Display ausgebildet, wobei die Bedienschalter zur manuellen Eingabe eines Bremsdrucks durch den Bediener und/oder zur sequentiellen Erhöhung und/oder Verringerung eines von der Steuereinheit ausgeregelten Bremsdrucks ausgebildet sind. Bedienschalter zur manuellen Eingabe eines Bremsdrucks können beispielsweise Nummerntasten sein. Bedienschalter zur sequenziellen Erhöhung und/oder Verringerung einer Steuergröße können beispielsweise Pfeiltasten sein.

Gemäß einer vorteilhaften Ausführungsform der erfindungsgemäßen Bremsvorrichtung ist das Display dazu ausgebildet, einen von einem Bediener mittels der Bedienschalter eingegebenen Bremsdruck und/oder einen von der Steuereinheit ausgeregelten Bremsdruck anzuzeigen. Mittels des Displays an dem Bedienelement lassen sich auch andere Steuer- und/oder Zustandsgrößen anzeigen, die von der Steuereinheit an das Bedienelement übermittelt werden. Hierzu zählen beispielsweise der Status des Bremssystems und dessen Komponenten.

Vorzugsweise weist die Bedientafel eine oder mehrere Nummerntasten zur Eingabe eines Bremsdrucks als Zahlenwert auf und/oder eine oder mehrere Pfeiltasten zur Erhöhung und/oder Verringerung eines vorgegebenen Bremsdrucks auf.

Bevorzugt ist es ferner, wenn die Bedientafel eine Übergabetaste zum Erzeugen eines Übernahmesignals zum Übergeben des vom Bediener vorgegebenen Drucks in Form repräsentativer Signale an die Steuereinheit aufweist. Das Bedienelement ist hierbei so ausgebildet, dass die eingegebenen Zahlenwerte in diskrete, für die Steuereinheit verarbeitbare Signale umgewandelt werden und an diese übermittelt werden können.

In einer weiteren vorteilhaften Ausführungsform der erfindungsgemäßen Bremsvorrichtung ist die Bedientafel an einer Seite des Fahrzeugs und/oder Fahrzeuganhängers angeordnet.

Gemäß einer alternativen besonders vorteilhaften Ausführungsform der erfindungsgemäßen Bremsvorrichtung ist das Bedienelement als ein Griff einer Feststellbremse des Fahrzeugs ausgebildet. Diese Ausführung ist deshalb besonders vorteilhaft, da das Bedienelement in einem schon im Fahrzeug vorhandenen Bauteil integriert ist. Die erfindungsgemäße Funktion des Bedienelements lässt sich auf diese Weise ausführen, ohne ein zusätzliches Bauteil im Fahrzeug unterbringen zu müssen. Die Bedienung des so ausgebildeten Bedienelements erfolgt außerdem intuitiv, wie sie der normalen Verwendung der Feststellbremse ähnelt.

Die Erfindung wird vorteilhaft dahingehend weitergebildet, dass der Griff der Feststellbremse im Inneren der Fahrerkabine angeordnet ist. Weiterhin kann die Erfindung dahingehend weitergebildet werden, dass die Feststellbremse im Wesentlichen schwenkbar gelagert ist, um bei aktiver Fertiger-Bremsfunktion den Bremsdruck an der Bremsanlage durch Anziehen oder Lösen des Griffes zu erhöhen oder zu verringern. Diese Betätigungsweise entspricht im Wesentlichen dem intuitiven Betätigungsverhalten einer Feststellbremse. Allerdings wäre es ebenfalls möglich, das Bedienelement so einzurichten, dass bei aktivierter Fertiger-Bremsfunktion ein Anziehen des Griffes eine Verringerung des Fertiger-Bremsdrucks verursacht, und im Gegenzug ein Lösen des Griffs eine Erhöhung des Fertiger-Bremsdrucks verursacht.

Gemäß einer weiteren Ausführungsform der erfindungsgemäßen Bremsvorrichtung ist die Feststellbremse mittels zumindest einer elektrischen Leitung mit der Steuereinheit verbunden und zur Signalübermittlung zwischen der Steuereinheit und der Feststellbremse ausgebildet. Die Signalübermittlung mittels der elektrischen Leitung kann hierbei kabelgebunden erfolgen, was Störeinflüsse minimiert. Es ist allerdings auch eine denkbare Alternative, die Signalübertragung zwischen dem Bedienelement und der Steuereinheit kabellos, beispielsweise als Funkverbindung, auszugestalten.

Bevorzugt ist es ferner, dass die Bremsvorrichtung zumindest einen Drucksensor aufweist, der zur Messung des von einem Bediener mittels der Feststellbremse vorgegebenen Drucks bei aktiver Fertiger-Bremsfunktion ausgebildet ist, der mittels zumindest einer elektrischen Leitung mit der Steuereinheit verbunden ist, und zur Signalübermittlung zwischen dem Sensor und der Steuereinheit angeordnet ist. Der Drucksensor ist hierbei dazu ausgebildet, den vom Bediener mittels Betätigung des Bedienelements vorgegebenen gewünschten Druckwert zu messen und ein hierfür repräsentatives Signal an die Steuereinheit zu übermitteln.

In einer weiteren vorteilhaften Ausführungsform der vorliegenden Erfindung ist die Steuereinheit dazu ausgebildet, die von dem Drucksensor übermittelten Signale als Druckwerte zu interpretieren, und die Steuereinheit ist weiterhin dazu ausgebildet, die zeitliche Änderung der übermittelten Druckwerte zu bestimmen. Dem Fahrer soll gemäß dieser Ausführungsform eine Möglichkeit gegeben werden, mittels des Bedienelementes, welches als Griff der Feststellbremse ausgebildet ist, eine Möglichkeit zu geben, der Steuereinheit den Befehl zu übermitteln, den zuletzt vorgegebenen gewünschten Fertiger-Bremsdruck zu übernehmen. Dadurch, dass die Steuereinheit die zeitliche Änderung der übermittelten Druckwerte bestimmen kann, ist es dem Bediener möglich, einen Bremsdruck-Übergabewunsch dadurch erkennbar zu machen, dass er dem Griff der Feststellbremse schnell löst. Die Steuereinheit ist erfindungsgemäß dazu ausgebildet, die Bewegungsgeschwindigkeit des Griffes als Gradient der von dem Drucksensor gemessenen Druckwerte zu interpretieren. Überschreitet dieser Gradient einen vorbestimmten Grenzwert, erkennt die Steuereinheit den Übergabewunsch des Bedieners.

In einer weiteren vorteilhaften Ausführungsform der vorliegenden Erfindung ist das Bedienelement dazu ausgebildet, den von der Steuereinheit bei aktiver Fertiger-Bremsfunktion ausgeregelten Bremsdruck zu ändern.

Die Erfindung löst die ihr zugrunde liegende Aufgabe weiterhin durch ein Verfahren zur Anpassung der Bremsung eines Lastkraftfahrzeugs mit Kippmulde und/oder Kippmuldenanhänger und angekoppelten Fertiger, wobei das Fahrzeug eine Bremsvorrichtung aufweist, die insbesondere gemäß den Ansprüchen 1 und 10 bis 16 ausgebildet ist, umfassend die Schritte:
- Aktivieren der Fertiger-Bremsfunktion;
- Ausregeln eines Vorgabe-Bremsdrucks p_{Vorgabe};
- manuelles Einsteuern eines Bremsdrucks p_{Steuer} mittels eines Bedienelements, insbesondere mittels Anziehen oder Lösen einer Feststellbremse; und
- Übernahme des Bremsdrucks p_{Steuer} als neuem Vorgabe-Bremsdruck p_{Vorgabe}.

In einer weiteren Ausführungsform des erfindungsgemäßen Verfahrens umfasst dies weiterhin die Schritte:
Messen eines manuell eingesteuerten Steuerdrucks p_{Steuer};
   - Erhöhung des auszuregelnden Drucks p_{Brems} und Übernahme als neuen Vorgabe-Bremsdruck p_{Vorgabe}, wenn p_{Steuer} erhöht wird, oder Verringerung des auszuregelnden Drucks p_{Brems}, wenn p_{Steuer} verringert wird;
   - Übernahme des auszuregelnden Drucks p_{Brems} als neuen Vorgabe-Bremsdruck p_{Vorgabe}, wenn die Feststellbremse so schnell gelöst wird, dass ein vorbestimmter Gradient der Änderung des Steuerdrucks je Zeiteinheit überschritten wird; und
   - Ausregeln des neuen Vorgabe-Bremsdrucks p_{Brems} mittels der Steuereinheit.

Die Erfindung löst die Aufgabe weiterhin durch ein Verfahren zur Anpassung der Bremsung eines Lastkraftfahrzeuges mit Kippmulde und/oder Kippmuldenanhänger und angekuppelten Fertiger, wobei das Fahrzeug eine Bremsvorrichtung aufweist, die insbesondere gemäß den Ansprüchen 1 bis 9 ausgebildet ist, umfassend die Schritte:
- Aktivierung des Bedienelementes insbesondere der Bedientafel;
- Eingabe eines gewünschten Bremsdrucks mittels des Bedienelements, oder Erhöhung oder Verringerung eines als Vorgabe-Bremsdruck gespeicherten Wertes;
- Übernahme des eingegebenen oder veränderten Wertes insbesondere mittels Betätigung einer Übernahmetaste, als neuen Vorgabe-Bremsdruck und auszuregelnden Bremsdruck;
- Aktivierung der Fertiger-Bremsfunktion zu einem beliebigen Zeitpunkt; und
- Ausregeln des übernommenen Drucks mittels der Steuereinheit.

Das Verfahren wird vorteilhaft weitergebildet, dass das Ausregeln des neuen Vorgabe-Bremsdrucks die Schritte umfasst:
- Übermittlung eines Signals, welches den Vorgabe-Bremsdruck repräsentiert, an die Steuereinheit;
- Aufnahme des übermittelten Signals durch die Steuereinheit;
- Verarbeitung des Signals durch die Steuereinheit;
- Übermittlung eines den ausgeregelten Bremsdruck repräsentierenden Signals an eines oder mehrere ABS-Ventile der Bremsanlage; und
- Aufbringen eines Bremsdrucks mittels zumindest eines Bremszylinders.

In einer weiteren vorteilhaften Ausführungsform des erfindungsgemäßen Verfahrens wird der Bremsdruck während des Fertigerbetriebs entsprechend einer Änderung der Fahrzeugmasse verändert. Diese Funktion ist besonders vorteilhaft, wenn auch Untergründen mit einem Gefälle das Fahrzeuggewicht abnimmt. Zu einer solchen Gewichtsabnahme kommt es vor allem durch das kontinuierliche Abladen von Material in den Fertiger. Durch ein dynamisches Anpassen des Bremsdrucks an das jeweils aktuelle Fahrzeuggewicht in Abhängigkeit der Fahrbahn- bzw. Fahrzeugneigung wird auf diese Weise eine konstante Bremskraft gewährleistet.

Die Erfindung wird im Folgenden anhand bevorzugter Ausführungsbeispiele und unter Bezugnahme auf die beiliegenden Figuren detailiert beschrieben. Hierbei zeigen:
- Fig. 1: eine schematische Darstellung eines Fahrzeuganhänger-Bremssystems;
- Fig. 2: eine diagrammatische Darstellung des Funktionsablaufes des Betriebs der erfindungsgemäßen Bremsvorrichtung; und
- Fig. 3: ein Blockschaltbild einer Ausführungsform des erfindungsgemäßen Verfahrens.

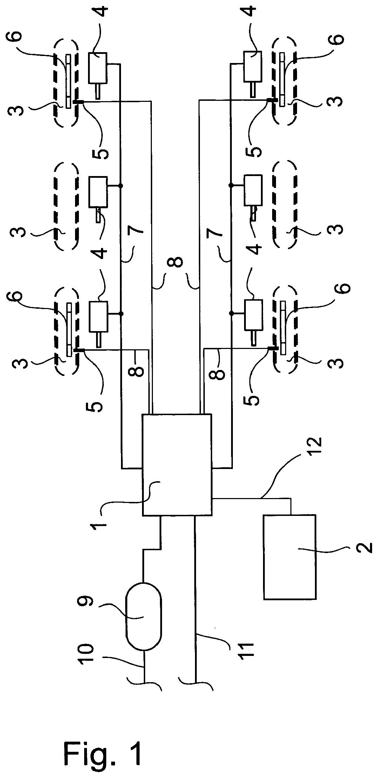

Fig. 1 zeigt ein Bremssystem für ein Anhängerfahrzeug mit einer Bremsvorrichtung gemäß der vorliegenden Erfindung. Das Bremssystem weist einen TEBS-Modulator (Trailer Electronic Brake System) auf, welcher eine Mehrzahl pneumatischer und elektrischer Anschlüsse aufweist. Der Modulator 1 ist mittels einer elektrischen Leitung 12 mit einem Bedienelement 2 verbunden. In den Modulator 1 ist eine (nicht dargestellte) Steuereinheit intergiert, welche zur Auswertung der von den Bedienelement empfangenen Signale und zur Ausgabe von Signalen an weitern Komplementen ausgebildet ist. Der Modulator 1 ist weiterhin mittels Sensorleitungen 8 mit ABS Sensoren 5 verbunden, welche jeweils an einem der sechs Räder 3 angeordnet sind. In jedem der Räder 3 ist weiterhin ein Polrad 6 im Wesentlichen koaxial angeordnet, welches mit dem jeweiligen ABS-Sensor zusammenwirkt, um die Drehgeschwindigkeit des Rades 3 relativ zu den anderen Rädern 3 zu erfassen. Der Modulator 1 ist weiterhin mittels jeweils einer Bremsleitung 7 für die rechte und linke Anhängerseite mit jeweils einem Bremszylinder 4 verbunden, der jeweils einem der Räder 3 zugeordnet ist. Der Bremszylinder 4 ist so ausgelegt, dass er eine Bremskraft auf das Rad 3, welchem er zugeordnet ist, aufbringt. Weiterhin ist eine Vorratsleitung 10 an den Modulator 1 angeschlossen, die mit einem Vorratsbehälter 9 in Verbindung steht, um das Anhänger-Bremssystem mit Vorratsdruck zu versorgen. Des Weiteren ist der Modulator an eine Steuerdruckleitung 11 angeschlossen.

Der Vorratsbehälter 9 versorgt das Bremssystem des in Fig. 1 dargestellten Fahrzeuganhängers mit druckbeaufschlagtem Fluid zur Betätigung der Bremszylinder 4. Der Modulator 1 ist mittels der integrierten Steuereinheit dazu ausgebildet, die Signale der ABS-Sensoren 5 auszuwerten und den im Zylinder 4 erzeugten Bremsdruck entsprechend auszuregeln. Die Steuerdruckleitung 11 hat die Funktion, einen von dem Fahrer angewiesenen Bremsdruck beziehungsweise Steuerdruck an den Modulator 1 zu übertragen. Der Steuerdruck wird von einem (nicht dargestellten) Drucksensor gemessen und mittels der in den Modulator 1 integrierten Steuereinheit an den Bremszylindern 4 ausgeregelt. Mittels des Bedienelementes 2 kann alternativ ein auszuregelnder Bremsdruck eingegeben werden, welcher an die Steuereinheit übermittelt wird. Der Bremsdruck, den ein Fahrer mittels der Feststellbremse vorgibt, wird ebenfalls mittels der Steuerdruckleitung 11 an den Modulator 1 übertragen.

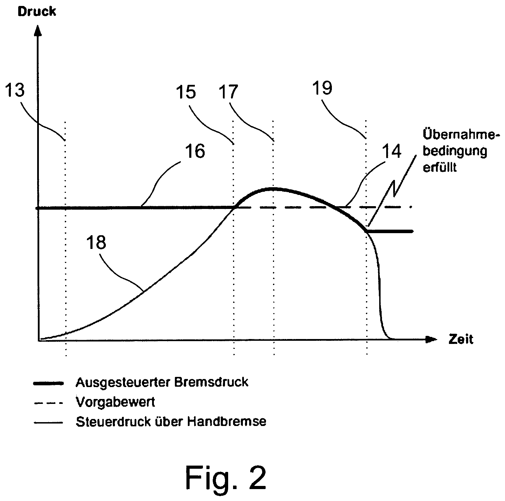

In Fig. 2 ist der Betrieb einer Bremsvorrichtung mit als Griff einer Feststellbremse ausgebildetem Bedienelement in einem Diagramm dargestellt. Es ist beispielhaft dargestellt, wie der voreingestellte Wert des Fertiger-Bremsdrucks durch den Bediener verringert wird. Zu einem Zeitpunkt 13 ist der von dem Modulator ausgesteuerte Bremsdruck 16 gleich dem Vorgabewert 14 für die Fertiger-Bremsfunktion. Der Steuerdruck 18 wird nun mittels anziehen des Griffes der Feststellbremse solange erhöht, bis an einem Zeitpunkt 15 der Steuerdruck 18 gleich dem ausgesteuerten Bremsdruck 16 und gleich dem Vorgabewert 14 ist. Durch ein weiteres Erhöhen des Steuerdrucks 18 mittels des Griffes der Feststellbremse ab dem Zeitpunkt 15 wird der auszusteuernde Bremsdruck im Gleichklang mit dem Steuerdruck weiter erhöht und entspricht nun nicht mehr dem Vorgabewert 14. Zu diesem Zeitpunkt hat der Bediener die Wahl, entweder durch weiteres Anziehen des Griffes der Feststellbremse den auszusteuernden Druck 16 weiter zu erhöhen, oder den auszusteuernden Druck 16 durch langsames Lösen des Griffes der Feststellbremse zu verringern. Letzteres geschieht in dem in Fig. 2 dargestellten Beispiel. Dem Lösen des Griffes der Feststellbremse folgt ein Absinken des Steuerdrucks 18 und somit auch des auszusteuernden Drucks 16 unter den vorher maßgeblichen Vorgabewert 14. Zu einem Zeitpunkt 19 wird der Griff der Feststellbremse schnell gelöst. Der Gradient der Druckänderung überschreitet zu diesem Zeitpunkt 19 einen in der Steuereinheit oder einem Datenspeicher hinterlegten Grenzwert, und der zu diesem Zeitpunkt 19 vorherrschende auszusteuernde Druck 16 wird von der Steuereinheit, die in dem Modulator 1 integriert ist, übernommen, da die Übernahmebedingung erfüllt ist. Optional wird dieser neue ausgesteuerte Druck 16 als neuer Vorgabewert hinterlegt.

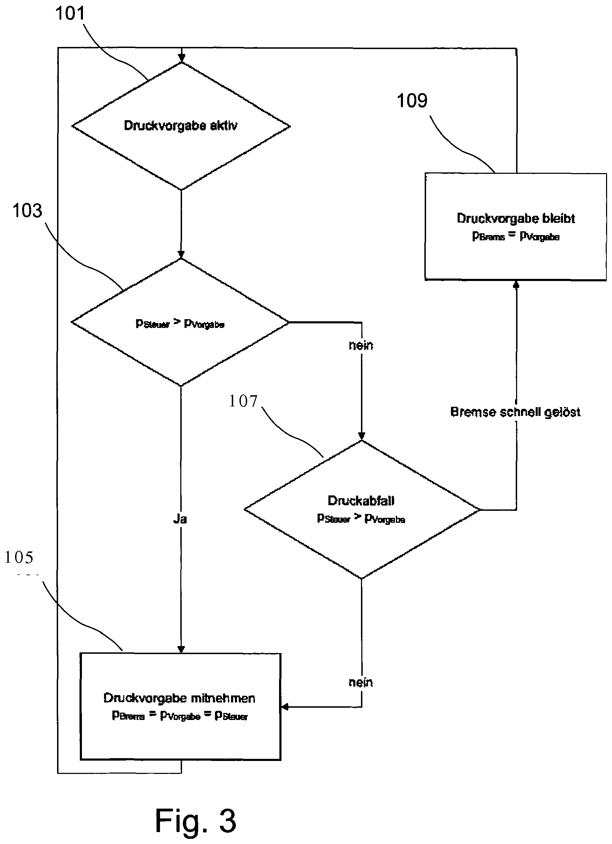

In Fig. 3 ist ein Blockschaltbild dargestellt, welches den Betrieb und den Ablauf des erfindungsgemäßen Verfahrens veranschaulicht. Ausgangspunkt des Verfahrens für die folgende Betrachtung ist der Schritt "Druckvorgabe aktiv" 101.

Bei diesem Schritt ist die Fertiger-Bremsfunktion aktiv, und es wird von der Steuereinheit ein Bremsdruck ausgeregelt, welcher dem vorgegebenen Standard-Bremsdruck entspricht. In einem nächsten Schritt 103 wird überprüft, ob der von dem Bedienelement vorgegebene Steuerdruck p_{Steuer} größer ist als der derzeit maßgebliche Vorgabedruck P_{Vorgabe}. Ist p_{Steuer} größer als P_{Vorgabe}, wird der aktuelle Wert von p_{Steuer} als neuer auszusteuernder Wert P_{Vorgabe} mitgenommen. Dies geschieht in Schritt 105. Falls p_{Steuer} nicht größer als P_{Vorgabe} ist, wird in einem Schritt 107 überprüft, ob ein Druckabfall vorliegt. Unter Druckabfall wird hierbei verstanden, dass der Steuerdruck durch schnelles Lösen des Griffes der Feststellbremse so steil abfällt, dass ein Grenzwert überschritten wird, welcher von der Steuereinheit erfasst wird. Ist also p_{Steuer} kleiner als P_{Vorga-be}, und wird kein Druckabfall bei Schritt 107 festgestellt, so wird der niedrigere Wert von p_{Steuer} als neuer, verminderter Vorgabewert P_{Vorgabe} übernommen. Voraussetzung hierfür ist allerdings, dass zuvor zumindest für einen kurzen Zeitraum p_{Steuer} größer als P_{Vorgabe} war, damit es zu einer Mitnahme des auszusteuernden Bremsdruck kommen konnte. Dies ist in Figur 2 dargestellt. Wird allerdings der zuvor beschriebene Grenzwert überschritten, wird in einem Schritt 109 der zuletzt aktuelle Vorgabewert P_{Vorgabe} als neuer auszugebender Bremsdruck P_{Brems} übernommen.

## Patentansprüche

1. Bremsvorrichtung für ein Lastkraftfahrzeug, das insbesondere an einen Fertiger koppelbar ist und eine Kippmulde und/oder einen KippmuldenAnhänger aufweist, mit
einer Bremsanlage zum Aufbringen einer Bremskraft auf zumindest ein Rad (3) des Lastkraftfahrzeuges, einer Steuereinheit (1) zur elektronischen Regelung der Bremsanlage, und
einem Schalter zur Aktivierung einer Fertiger-Bremsfunktion,
mit einem Bedienelement (2) zur manuellen Änderung des steuereinheitausgeregelten Bremsdrucks, **dadurch gekennzeichnet, dass** das Bedienelement (2) dazu ausgebildet ist, den von der Steuereinheit (1) bei aktiver Fertiger-Bremsfunktion ausgeregelten Bremsdruck zu ändern.

2. Bremsvorrichtung nach Anspruch 1,
**dadurch gekennzeichnet, dass** die Steuereinheit (1) dazu ausgebildet ist, wahlweise automatisch einen Standard-Bremsdruck auszuregeln oder mittels der Verarbeitung von Signalen, die manuell von einem Bediener mittels des Bedienelements (2) erzeugt wurden, einen entsprechenden Bremsdruck auszuregeln.

3. Bremsvorrichtung nach Anspruch 1 oder 2,
**dadurch gekennzeichnet, dass** das Bedienelement (2) als Bedientafel ausgebildet ist, die mittels elektronischer Datenleitungen (12), insbesondere einem CAN-Bus, mit der Steuereinheit (1) verbunden ist, um Signale zu übertragen, die von der Steuereinheit (1) gesendet werden oder von einem Bediener mittels der Bedientafel eingegeben werden.

4. Bremsvorrichtung nach Anspruch 3,
**dadurch gekennzeichnet, dass** die Bedientafel mit Bedienschaltern und einem Display ausgebildet ist, wobei die Bedienschalter zur manuellen Eingabe eines Bremsdrucks durch den Bediener und/oder zur sequentiellen Erhöhung und/oder Verringerung eines von der Steuereinheit (1) ausgeregelten Bremsdrucks ausgebildet sind.

5. Bremsvorrichtung nach Anspruch 4,
**dadurch gekennzeichnet, dass** das Display dazu ausgebildet ist, einen von einem Bediener mittels der Bedienschalter eingegebenen Bremsdruck und/oder einen von der Steuereinheit (1) ausgeregelten Bremsdruck anzuzeigen.

6. Bremsvorrichtung nach einem der Ansprüche 2 bis 5,
**dadurch gekennzeichnet, dass** die Bedientafel eine oder mehrere Nummerntasten zur Eingabe eines Bremsdrucks als Zahlenwert aufweist.

7. Bremsvorrichtung nach einem der Ansprüche 2 bis 6,
**dadurch gekennzeichnet, dass** die Bedientafel eine oder mehrere Pfeiltasten zur Erhöhung und/oder Verringerung eines vorgegebenen Bremsdrucks aufweist,

8. Bremsvorrichtung nach einem der Ansprüche 2 bis 7,
**dadurch gekennzeichnet, dass** die Bedientafel eine Übergabetaste zum Erzeugen eines Übernahmesignals zum Übergeben des vom Bediener vorgegebenen Drucks in Form repräsentativer Signale an die Steuereinheit (1) aufweist.

9. Bremsvorrichtung nach einem der Ansprüche 2 bis 8,
**dadurch gekennzeichnet, dass** die Bedientafel an einer Seite des Fahrzeugs und/oder Fahrzeuganhängers angeordnet ist.

10. Bremsvorrichtung nach Anspruch 1,
**dadurch gekennzeichnet, dass** das Bedienelement (2) als ein Griff einer Feststellbremse des Fahrzeugs ausgebildet ist.

11. Bremsvorrichtung nach Anspruch 10,
**dadurch gekennzeichnet, dass** der Griff der Feststellbremse im Inneren der Fahrerkabine angeordnet ist.

12. Bremsvorrichtung nach Anspruch 10 oder 11,
**dadurch gekennzeichnet, dass** die Feststellbremse im Wesentlichen schwenkbar gelagert ist, um bei aktivierter Fertiger-Bremsfunktion den Bremsdruck an der Bremsanlage durch Anziehen oder Lösen des Griffes zu erhöhen oder zu verringern.

13. Bremsvorrichtung nach einem der Ansprüche 11 bis 12,
**dadurch gekennzeichnet, dass** die Feststellbremse mittels zumindest einer elektrischen Leitung mit der Steuereinheit verbunden und zur Signalübermittlung zwischen der Steuereinheit (1) und der Feststellbremse ausgebildet ist.

14. Bremsvorrichtung nach einem der Ansprüche 11 bis 13, **gekennzeichnet durch** zumindest einen Drucksensor, der zur Messung des von einem Bediener mittels der Feststellbremse vorgegebenen Drucks bei aktiver Fertiger-Bremsfunktion ausgebildet ist,
der mittels zumindest einer elektrischen Leitung mit der Steuereinheit (1) verbunden ist, und zur Signalübermittlung zwischen dem Sensor und der Steuereinheit (1) angeordnet ist.

15. Bremsvorrichtung nach Anspruch 14,
**dadurch gekennzeichnet, dass** die Steuereinheit (1) dazu ausgebildet ist, die von dem Drucksensor übermittelten Signale als Druckwerte zu interpretieren, und
dass die Steuereinheit (1) weiterhin dazu ausgebildet ist, die zeitliche Änderung der übermittelten Druckwerte zu bestimmen.

16. Verfahren zur Anpassung der Bremsung eines Lastkraftfahrzeugs mit Kippmulde und/oder Kippmuldenanhänger und angekoppeltem Fertiger, wobei das Fahrzeug eine Bremsvorrichtung aufweist, umfassend die Schritte:
- Aktivieren der Fertiger-Bremsfunktion;
- Ausregeln eines Vorgabe-Bremsdrucks p_{Vorgabe};
- **gekennzeichnet durch** manuelles Einsteuern eines Bremsdrucks p_{Steuer} mittels eines Bedienelements (2), insbesondere mittels Anziehen oder Lösen einer Feststellbremse; und
- Übernahme des Bremsdrucks p_{Steuer} als neuem Vorgabe-Bremsdruck p_{Vorgabe}.

17. Verfahren nach Anspruch 16,
weiterhin umfassend die Schritte:
- Messen eines manuell eingesteuerten Steuerdrucks p_{Steuer};
- Erhöhung des auszuregelnden Drucks p_{Brems} und Übernahme als neuen Vorgabe-Bremsdruck p_{Vorgabe}, wenn p_{Steuer} erhöht wird, oder Verringerung des auszuregelnden Drucks p_{Brems}, wenn p_{Steuer} verringert wird;
- Übernahme des auszuregelnden Drucks p_{Brems} als neuen Vorgabe-Bremsdruck p_{Vorgabe}, wenn die Feststellbremse so schnell gelöst wird, dass ein vorbestimmter Gradient der Änderung des Steuerdrucks je Zeiteinheit überschritten wird; und
- Ausregeln des neuen Vorgabe-Bremsdrucks p_{Brems} mittels der Steuereinheit (1).

18. Verfahren zur Anpassung der Bremsung eines Lastkraftfahrzeugs mit Kippmulde und/oder Kippmuldenanhänger und angekoppeltem Fertiger, wobei das Fahrzeug eine Bremsvorrichtung aufweist, umfassend die Schritte:
- Aktivierung des Bedienelementes (2), insbesondere der Bedientafel;
- **gekennzeichnet durch** Eingabe eines gewünschten Bremsdrucks mittels des Bedienelements, oder Erhöhung oder Verringerung eines als Vorgabe-Bremsdruck gespeicherten Wertes;
- Übernahme des eingegebenen oder veränderten Wertes insbesondere mittels Betätigung einer Übernahmetaste, als neuen Vorgabe-Bremsdruck und auszuregelnden Bremsdruck;
- Aktivierung der Fertiger-Bremsfunktion zu einem beliebigen Zeitpunkt; und
- Ausregeln des übernommenen Drucks mittels der Steuereinheit (1).

19. Verfahren nach Anspruch 17 oder 18, **dadurch gekennzeichnet, dass** das Ausregeln des neuen Vorgabe-Bremsdrucks die Schritte umfasst:
- Übermittlung eines Signals, welches den Vorgabe-Bremsdruck repräsentiert, an die Steuereinheit (1);
- Aufnahme des übermittelten Signals durch die Steuereinheit (1);
- Verarbeitung des Signals durch die Steuereinheit (1);
- Übermittlung eines den ausgeregelten Bremsdruck repräsentierenden Signals an eines oder mehrere ABS-Ventile der Bremsanlage; und
- Aufbringen eines Bremsdrucks mittels zumindest eines Bremszylinders (4).

20. Verfahren nach einem der Ansprüche 16 bis 19,
**dadurch gekennzeichnet, dass** der Bremsdruck während des Fertigerbetriebs entsprechend der Beladungsänderung verändert wird.

## Claims

1. Brake device for a lorry, which can be coupled, in particular, to a finisher and has a tipping trough and/or a tipping trough trailer, having a brake system for applying a braking force to at least one wheel (3) of the lorry, a control, unit (1) for electronically regulating the brake system, and
a switch for activating a finisher braking function,
having an operator control element (2) for manually changing the control-unit-adjusted brake pressure, **characterized in that** the operator control element (2) is designed to change the brake pressure adjusted by the control unit (1) when the finisher braking function is active.

2. Brake device according to Claim 1,
**characterized in that** the control unit (1) is designed either to adjust automatically a standard brake pressure or to adjust a corresponding brake pressure by processing signals which have been generated manually by an operator by means of the operator control element (2).

3. Brake device according to Claim 1 or 2, **characterized in that** the operator control element (2) is embodied as a control panel which is connected to the control unit (1) by means of electronic data lines (12), in particular a CAN bus, in order to transmit signals which are sent by the control unit (1) or are input by an operator by means of the control panel.

4. Brake device according to Claim 3,
**characterized in that** the control panel is embodied with operator control switches and a display, wherein the operator control switches are designed for the manual inputting of a brake pressure by the operator and/or for the sequential increasing and/or reducing of a brake pressure which has been adjusted by the control unit (1).

5. Brake device according to Claim 4,
**characterized in that** the display is designed to indicate a brake pressure which has been input by an operator by means of the operator control switches and/or a brake pressure which has been adjusted by the control unit (1).

6. Brake device according to one of Claims 2 to 5,
**characterized in that** the control panel has one or more numerical keys for inputting a brake pressure as a numerical value.

7. Brake device according to one of Claims 2 to 6,
**characterized in that** the control panel has one or more arrow keys for increasing and/or reducing a predefined brake pressure.

8. Brake device according to one of Claims 2 to 7, **characterized in that** the control panel has a transfer key for generating a transfer signal for transferring the pressure predefined by the operator, in the form of representative signals, to the control unit (1).

9. Brake device according to one of Claims 2 to 8,
**characterized in that** the control panel is arranged on one side of the vehicle and/or vehicle trailer.

10. Brake device according to Claim 1,
**characterized in that** the operator control element (2) is embodied as a handle of a parking brake of the vehicle.

11. Brake device according to Claim 10,
**characterized in that** the handle of the parking brake is arranged in the interior of the driver's cab.

12. Brake device according to Claim 10 or 11,
**characterized in that** the parking brake is mounted in an essentially pivotable fashion, in order to increase or reduce the brake pressure at the brake system when the finisher braking function is activated, by pulling or releasing the handle.

13. Brake device according to one of Claims 11 to 12,
**characterized in that** the parking brake is connected to the control unit by means of at least one electrical line and is designed to transmit signals between the control unit (1) and the parking brake.

14. Brake device according to one of Claims 11 to 13,
**characterized by** at least one pressure sensor which is designed to measure the pressure predefined by an operator by means of the parking brake, when the finisher braking function is active,
which pressure sensor is connected to the control unit (1) by means of at least one electrical line and is arranged so as to transmit signals between the sensor and the control unit (1).

15. Brake device according to Claim 14,
**characterized in that** the control unit (1) is designed to interpret the signals transmitted by the pressure sensor as pressure values, and
**in that** the control unit (1) is also designed to determine the change in the transmitted pressure values over time.

16. Method for adapting the braking of a lorry having a tipping trough and/or tipping trough trailer and coupled finisher, wherein the vehicle has a brake device, comprising the steps:
- activating the finisher braking function;
- adjusting a predefined brake pressure P_{predef};
- **characterized by** manual application of a brake pressure p_{cont} by means of an operator control element (2), in particular by pulling or releasing a parking brake; and
- transferring the brake pressure p_{cont} as a new predefined brake pressure p_{predef}.

17. Method according to Claim 16,
further comprising the steps:
- measuring a manually input control pressure p_{cont};
- increasing the pressure p_{brake} to be adjusted and transferring it as a new predefined brake pressure p_{predef} if p_{cont} is increased, or reducing the pressure p_{brake} to be adjusted if p_{cont} is reduced;
- transferring the pressure p_{brake} to be adjusted as a new predefined brake pressure p_{predef} if the parking brake is released so quickly that a predetermined gradient of the change of the control pressure is exceeded per unit of time; and
- adjusting the new predefined brake pressure p_{brake} by means of the control unit (1).

18. Method for adapting the braking of a lorry having a tipping trough and/or tipping trough trailer and coupled finisher, wherein the vehicle has a brake device, comprising the steps:
- activating of the operator control element (2), in particular the control panel;
- **characterized by** inputting a desired brake pressure by means of the operator control element, or increasing or reducing a value which is stored as a predefined brake pressure;
- transferring the input or changed value, in particular by activating a transfer key, as a new predefined brake pressure and brake pressure to be adjusted;
- activating the finisher braking function at an arbitrary time;
and
- adjusting the transferred pressure by means of the control unit (1).

19. Method according to Claim 17 or 18, **characterized in that** the adjustment of the new predefined brake pressure comprises the steps:
- transferring to the control unit (1) a signal which represents the predefined brake pressure;
- receiving the transferred signal by means of the control unit (1);
- processing the signal by means of the control unit (1);
- transferring a signal representing the adjusted brake pressure to one or more ABS valves of the brake system; and
- producing a brake pressure by means of at least one brake cylinder (4).

20. Method according to one of Claims 16 to 19,
**characterized in that** the brake pressure is changed in accordance with the change in load during the finisher operation.

## Revendications

1. Dispositif de freinage pour un camion, lequel peut notamment être attelé à un finisseur et possède une benne basculante et/ou une remorque à benne basculante, comprenant
un système de freinage destiné à appliquer une force de freinage sur au moins une roue (3) du camion, une unité de contrôle (1) destinée à la régulation électronique du système de freinage, et
un commutateur destiné à activer une fonction de freinage de finisseur,
comprenant un élément de commande (2) servant à modifier manuellement la pression de freinage régulée par l'unité de contrôle, **caractérisé en ce que** l'élément de commande (2) est configuré pour modifier la pression de freinage régulée lorsque la fonction de freinage de finisseur est active.

2. Dispositif de freinage selon la revendication 1, **caractérisé en ce que** l'unité de contrôle (1) est configurée pour, au choix, réguler automatiquement une pression de freinage standard ou pour réguler une pression de freinage correspondante au moyen du traitement de signaux qui ont été générés manuellement par un opérateur au moyen de l'élément de commande (2).

3. Dispositif de freinage selon la revendication 1 ou 2, **caractérisé en ce que** l'élément de commande (2) est réalisé sous la forme d'un tableau de commande qui est relié à l'unité de contrôle (1) au moyen de lignes de données électroniques (12), notamment un bus CAN, en vue de transmettre les signaux qui sont envoyés par l'unité de contrôle (1) ou qui sont saisi par un opérateur au moyen du tableau de commande.

4. Dispositif de freinage selon la revendication 3, **caractérisé en ce que** le tableau de commande est formé par des commutateurs de commande et un afficheur, les commutateurs de commande étant configurés pour la saisie manuelle d'une pression de freinage par l'opérateur et/ou pour augmenter et/ou diminuer séquentiellement une pression de freinage régulée par l'unité de contrôle (1).

5. Dispositif de freinage selon la revendication 4, **caractérisé en ce que** l'afficheur est configuré pour afficher une pression de freinage saisie par l'opérateur au moyen des commutateurs de commande et/ou une pression de freinage régulée par l'unité de contrôle (1).

6. Dispositif de freinage selon l'une des revendications 2 à 5, **caractérisé en ce que** le tableau de commande possède une ou plusieurs touches numériques destinées à la saisie d'une pression de freinage sous la forme d'une valeur numérique.

7. Dispositif de freinage selon l'une des revendications 2 à 6, **caractérisé en ce que** le tableau de commande possède une ou plusieurs touches fléchées destinées à augmenter et/ou à diminuer une pression de freinage prédéfinie.

8. Dispositif de freinage selon l'une des revendications 2 à 7, **caractérisé en ce que** le tableau de commande possède une touche de transfert destinée à générer un signal de validation en vue du transfert de la pression prédéfinie par l'opérateur sous la forme de signaux représentatifs à l'unité de contrôle (1).

9. Dispositif de freinage selon l'une des revendications 2 à 8, **caractérisé en ce que** le tableau de commande est disposé sur un côté du véhicule et/ou de la remorque de véhicule.

10. Dispositif de freinage selon la revendication 1, **caractérisé en ce que** l'élément de commande (2) est réalisé sous la forme d'une poignée d'un frein de stationnement du véhicule.

11. Dispositif de freinage selon la revendication 10, **caractérisé en ce que** la poignée du frein de stationnement est disposée à l'intérieur de la cabine du conducteur.

12. Dispositif de freinage selon la revendication 10 ou 11, **caractérisé en ce que** le frein de stationnement est monté sensiblement pivotant pour, lorsque la fonction de freinage du finisseur est activée, augmenter ou réduire la pression de freinage sur le système de freinage en serrant ou en relâchant la poignée.

13. Dispositif de freinage selon l'une des revendications 11 à 12, **caractérisé en ce que** le frein de stationnement est relié à l'unité de contrôle au moyen d'au moins un câble électrique et il est configuré pour la transmission de signaux entre l'unité de contrôle (1) et le frein de stationnement.

14. Dispositif de freinage selon l'une des revendications 11 à 13,
**caractérisé par** au moins un capteur de pression, lequel est configuré pour mesurer la force prédéfinie par un opérateur au moyen du frein de stationnement lorsque la fonction de freinage du finisseur est activée,
lequel est relié à l'unité de contrôle (1) au moyen d'au moins un câble électrique et disposé pour la transmission de signaux entre le capteur et l'unité de contrôle (1).

15. Dispositif de freinage selon la revendication 14, **caractérisé en ce que** l'unité de contrôle (1) est configurée pour interpréter les signaux communiqués par le capteur de pression comme des valeurs de pression, et
**en ce que** l'unité de contrôle (1) est en outre configurée pour déterminer la variation dans le temps des valeurs de pression communiquées.

16. Procédé pour adapter le freinage d'un camion comprenant une benne basculante et/ou une remorque à benne basculante et auquel est attelé un finisseur, le véhicule possédant un dispositif de freinage, comprenant les étapes suivantes :
- activation de la fonction de freinage du finisseur ;
- régulation d'une pression de freinage de consigne P_{Vorgabe} ;
- **caractérisé par** la commande manuelle d'une pression de freinage p_{Steuer} au moyen d'un élément de commande (2), notamment par serrage ou relâchement d'un frein de stationnement ; et
- validation de la pression de freinage Psteuer en tant que nouvelle pression de freinage de consigne P_{Vorgabe}.

17. Procédé selon la revendication 16,
comprenant en outre les étapes suivantes :
- mesure d'une pression de freinage p_{Steuer} commandée manuellement ;
- augmentation de la pression à réguler p_{Brems} et validation en tant que nouvelle pression de freinage de consigne P_{Vorgabe} lorsque p_{Steuer} est augmentée, ou diminution de la pression à réguler p_{Brems} lorsque p_{Steuer} est réduite ;
- validation de la pression à réguler p_{Brems} en tant que nouvelle pression de freinage de consigne P_{Vorgabe} lorsque le frein de stationnement est relâché rapidement au point qu'un gradient prédéfini de la variation de la pression de commande par unité de temps est dépassé ; et
- régulation de la nouvelle pression à réguler p_{Brems} au moyen de l'unité de contrôle (1).

18. Procédé pour adapter le freinage d'un camion comprenant une benne basculante et/ou une remorque à benne basculante et auquel est attelé un finisseur, le véhicule possédant un dispositif de freinage, comprenant les étapes suivantes :
- activation de l'élément de commande (2), notamment du tableau de commande ;
- **caractérisé par** la saisie d'une pression de freinage souhaitée au moyen de l'élément de commande, ou augmentation ou diminution d'une valeur mémorisée en tant que pression de freinage de consigne ;
- validation de la valeur saisie ou modifiée, notamment par un actionnement d'une touche de validation, en tant que nouvelle pression de freinage de consigne et pression de freinage à réguler ;
- activation de la fonction de freinage du finisseur à un instant quelconque ; et
- régulation de la pression validée au moyen de l'unité de contrôle (1).

19. Procédé selon la revendication 17 ou 18, **caractérisé en ce que** la régulation de la pression de freinage de consigne comprend les étapes suivantes :
- communication, à l'unité de contrôle (1), d'un signal qui représente la pression de freinage de consigne ;
- acquisition du signal communiqué par l'unité de contrôle (1) ;
- traitement du signal par l'unité de contrôle (1) ;
- communication d'un signal représentant la pression de freinage régulée à une ou plusieurs vannes ABS du système de freinage ; et
- application d'une pression de freinage au moyen d'au moins un cylindre de frein (4).

20. Procédé selon l'une des revendications 16 à 19, **caractérisé en ce que** la pression de freinage est modifiée pendant le fonctionnement du finisseur conformément à la variation de charge.
